**Europäisches Patentamt**

**European Patent Office**

**Office européen des brevets**

(11) Numéro de publication : **0 475 858 A1**

# (12) DEMANDE DE BREVET EUROPEEN

(21) Numéro de dépôt : **91420305.4**

(22) Date de dépôt : **02.09.91**

(51) Int. Cl.$^5$ : **G01B 5/02, A43D 1/02**

(30) Priorité : **11.09.90 FR 9011636**

(43) Date de publication de la demande :
**18.03.92 Bulletin 92/12**

(84) Etats contractants désignés :
**AT BE CH DE DK ES GB GR IT LI LU NL SE**

(71) Demandeur : **CENTRE TECHNIQUE CUIR CHAUSSURE MAROQUINERIE**
**4 rue Hermann Frenkel**
**F-69007 Lyon (FR)**

(72) Inventeur : **Clot, Robert**
**62bis Avenue Leclerc**
**F-69007 Lyon (FR)**
Inventeur : **Darragon, Jérôme**
**rue Lamartine**
**St André le Gaz, F-38490 les Abrets (FR)**
Inventeur : **Buffevant, Bernard**
**Les Carres Millery**
**F-69390 Vernaison (FR)**

(74) Mandataire : **Bratel, Gérard et al**
**Cabinet GERMAIN & MAUREAU B.P. 3011**
**F-69392 Lyon Cédex 03 (FR)**

(54) **Appareil pour la mesure de longueurs et de périmètres.**

(57)    Cet appareil détermine des valeurs dimensionnelles mesurées selon des tracés rectilignes ou curvilignes.

Un corps principal (1) est muni d'un bec fixe (6), et comporte une glissière longitudinale (4) pour un coulisseau (5) muni d'un bec mobile (7). Un lien souple (12), attaché à l'extrémité (8) du bec fixe (6), s'étend vers l'extrémité (9) du bec mobile (7) puis est guidé dans ce bec mobile et se prolonge dans le corps (1) jusqu'à des moyens de mise en tension (14), pour former un mouflage. Une graduation (16) ou un capteur (20) permet de détecter le déplacement du lien souple (12) qui représente, selon le cas, la longueur (L) d'un objet placé entre deux butées (10,11), ou le périmètre (P) d'un oblet entouré par la partie du lien mobile (12) qui s'étend entre les extrémités (8,9) des deux becs (6,7).

Application à la mensuration de parties du corps humain : pied, tête, etc.

FIG.1

La présente invention concerne un appareil pour la mesure de longueurs et de périmètres, c'est-à-dire un appareil qui est conçu pour déterminer des valeurs dimensionnelles mesurées selon des tracés rectilignes ou curvilignes, se rapportant à différents volumes, objets ou parties d'objets, notamment des parties du corps humain et, en particulier la tête, le bras, la main ou le pied. Cet appareil est ainsi adapté pour fournir des données chiffrées utilisables individuellement ou de manière statistique dans la conception et la fabrication d'articles manufacturés, tels que par exemple les casques de protection, les gants et les articles chaussants, ainsi que pour le choix de ces articles au stade de leur commercialisation.

Pour qu'un article manufacturé, tel qu'un casque de protection, un gant ou une chaussure, soit confortable donc facile à porter, il doit correspondre à l'objet de son utilisation, c'est-à-dire à la partie du corps humain à laquelle il est destiné, non seulement en longueur ou largeur, mais surtout en volume, dans toutes les positions, au repos ou en mouvement, de cette partie du corps.

La plupart du temps, on détermine la pointure du pied d'un individu en mesurant la longueur entre l'arrière du talon et l'extrémité de l'orteil le plus proéminent. Une bonne définition de la capacité chaussante consiste à mesurer, en plus de la longueur du pied, la longueur du périmètre de l'articulation métatarsophalangienne.

Cette notion de valeurs multidimensionnelles d'un volume, en particulier longueur et périmètre, permettant de définir une pointure se retrouve dans toutes les mesures d'organes humains tels que la tête ou la main, ou l'on parle de "taille" ou de "pointure" de casque ou de gant.

La mesure des valeurs multidimensionnelles doit permettre, dans le contexte actuel d'une bonne adéquation produit - utilisation de concevoir des produits répondant au mieux aux besoins des utilisateurs, en tenant compte malgré tout de facteurs subjectifs, comme la mode et de facteurs objectifs, comme la nature des matériaux employés et leur degré de déformabilité ou le type d'utilisation visée.

De nombreux procédés et dispositifs de mesure ont été déjà préconisés pour la mesure des longueurs et périmètres, notamment du pied ou de la forme d'une chaussure, et ces dispositifs font appel de façon générale à la conjugaison de moyens mécaniques et électroniques. Des systèmes simples de corrélation entre valeurs et pointures ont également été préconisés.

Les systèmes de mesures existant actuellement sont principalement des appareillages de métrologie du pied ou de détermination de pointures, permettant de choisir une chaussure parmi une gamme préétablie. La plupart de ces dispositifs sont plus ou moins rigides, fixes, lourds d'emploi, voire même coûteux.

La présente invention élimine ces inconvénients, en fournissant un appareil autonome, léger, portatif, économique et simple d'emploi, donnant de façon directe et précise par un principe mécanique simple et rigoureux les mesures de longueurs ou de périmètres au choix, sans aucune transformation de cet appareil selon le type de mesure choisi, tout en étant compatible avec les systèmes informatiques ou micro-informatiques de traitement des données.

A cet effet, l'invention a essentiellement pour objet un appareil pour la mesure de longueurs et de périmètres, comprenant en combinaison :

– un corps principal définissant une direction longitudinale, avec une première butée et un point fixe,

– un élément monté coulissant en direction longitudinale sur le corps principal, l'élément coulissant comportant une seconde butée, située en regard de la première butée, et cet élément définissant un point mobile situé en regard du point fixe précité à une distance variable de celui-ci,

– un lien souple non extensible qui présente successivement une première extrémité attachée au point fixe précité du corps principal, une première partie s'étendant librement entre ce point fixe et le point mobile situé en regard, une partie guidée dans ou sur l'élément coulissant depuis ledit point mobile et se prolongeant dans le corps principal parallèlement à sa première partie, et une autre extrémité liée à des moyens de mise en tension portés par le corps principal, de sorte que le lien souple forme un mouflage à deux brins, et

– des moyens de détection du déplacement de ce lien souple, représentatif selon le cas de la longueur d'un objet placé entre les deux butées précitées et entrant en contact avec celles-ci, ou du périmètre d'un objet entouré par la partie du lien souple s'étendant entre le point fixe et le point mobile précités.

Ainsi, la géométrie de l'appareil selon l'invention est telle que le lien souple, qui coulisse lui-même sur l'élément coulissant de cet appareil en formant un mouflage à deux brins, décrit un déplacement qui, avec une origine convenablement choisie, est égal au double d'une longueur à mesurer, mais est égal à la valeur même d'un périmètre à mesurer.

Les moyens de mise en tension du lien souple sont avantageusement constitués par un enrouleur, porté par le corps principal de l'appareil, de sorte que le déplacement du lien souple correspond directement à la longueur déroulée de ce lien souple.

Dans une forme de réalisation simple de l'invention, ce lien souple est conformé comme un ruban souple, portant sur au moins une partie de sa longueur une graduation lisible au travers d'au moins une fenêtre ménagée, par exemple, dans le corps principal de l'appareil. Avantageusement, la graduation du ruban souple est double et fournit ainsi, directement, soit une mesure de longueur, soit une mesure de périmètre selon l'utilisation de l'appareil.

Selon une autre forme de réalisation de l'invention, l'appareil comporte un capteur électrique ou électronique de déplacement du lien souple ; il peut s'agir, notamment, d'un capteur détectant la rotation d'une poulie ou autre organe rotatif sur lequel passe le lien souple.

Dans un mode de réalisation particulier de l'invention, le corps principal de l'appareil, de forme allongée, possède une partie formant glissière longitudinale pour l'élément coulissant, et est muni latéralement d'un bec curviligne fixe dont l'extrémité libre définit le point fixe d'attache du lien souple et qui porte la première butée, tandis que l'élément coulissant est conformé comme un coulisseau, monté mobile dans la glissière longitudinale du corps, coulisseau auquel se rattache un bec curviligne mobile de conformation tubulaire dont l'extrémité libre définit le point mobile précité et qui porte la seconde butée, le lien souple traversant le passage défini par la conformation tubulaire du bec curviligne mobile. Ce passage assure le guidage du lien souple pour former le mouflage.

De toute façon, l'invention sera mieux comprise à l'aide de la description qui suit, en référence au dessin schématique annexé représentant, à titre d'exemple non limitatif, une forme d'exécution de cet appareil pour la mesure de longueurs et de périmètres :

    Figure 1 est une vue d'ensemble, en perspective, d'un appareil conforme à la présente invention ;

    Figure 2 est une vue très schématique en coupe horizontale de l'appareil selon la figure 1, illustrant l'utilisation de cet appareil pour la mesure des longueurs ;

    Figure 3 est une vue similaire à figure 2, illustrant l'utilisation du même appareil pour la mesure des périmètres.

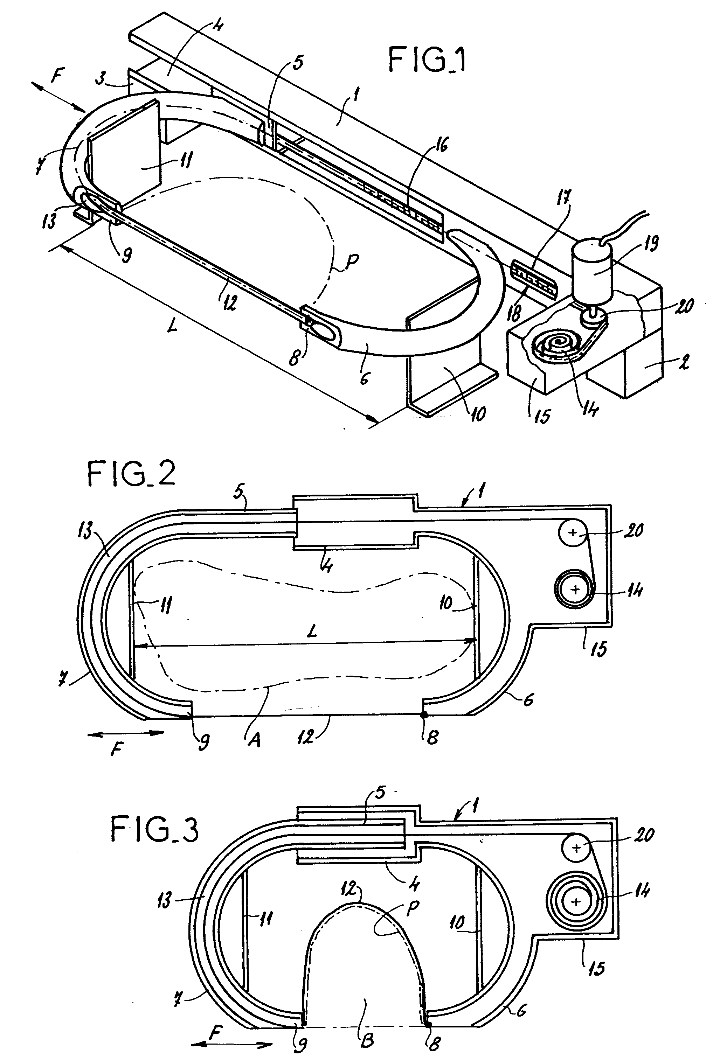

L'appareil de mesure représenté sur la figure 1 comprend un corps principal de forme allongée 1, muni à ses extrémités de plots 2 et 3 lui permettant de reposer sur une surface d'appui, telle qu'un sol horizontal. Le corps 1 possède, sur au moins une partie de sa longueur, une conformation évidée de profil approprié constituant une glissière longitudinale 4. Un coulisseau 5 est monté mobile en direction longitudinale dans la glissière 4.

Un bec curviligne fixe 6 est rattaché solidairement au corps 1 et s'étend sur un côté de ce corps. Un bec curviligne mobile 7, de conformation tubulaire, est rattaché solidairement au coulisseau 5 et peut se déplacer linéairement avec ce dernier, comme indiqué par une flèche F. Les deux becs curvilignes 6 et 7 sont situés dans un même plan, l'extrémité libre 8 du bec fixe 6 étant située en regard de l'extrémité libre 9 du bec mobile 7.

Les deux becs curvilignes 6 et 7 portent des butées respectives 10 et 11, situées l'une en regard de l'autre dans des plans parallèles et constituant aussi des pieds d'appui au sol pour l'appareil.

Un ruban souple 12 possède une première extrémité fixée à l'extrémité libre 8 du bec fixe 6. le ruban souple 12 s'étend d'abord en direction de l'extrémité libre 9 du bec mobile 7, ou il pénètre dans le passage 13 fourni par la conformation tubulaire de ce bec mobile 7. Le ruban 12 comporte ainsi un trajet curviligne suivant celui du bec mobile 7, puis il se prolonge par une partie rectiligne qui s'étend à l'intérieur du corps 1. L'autre extrémité du ruban 12 est enroulée en spirale, sur un enrouleur 14 logé dans un boîtier 15 porté par le corps 1. L'enrouleur 14 assure la mise en tension du ruban 12, de sorte que celui-ci s'étend selon un trajet rectiligne entre les extrémités respectives 8 et 9 des becs fixe 6 et mobile 7, si aucun obstacle ne vient dévier le ruban 12 à cet endroit. La partie alors rectiligne du ruban 12, entre les extrémités 8 et 9 des becs 6 et 7, est parallèle au corps 1 et le ruban 12 forme ainsi un genre de mouflage à deux brins parallèles.

Lorsque le bec mobile 7 se déplace linéairement par rapport au bec fixe 6, le ruban souple 12 coulisse dans le passage 13 du bec mobile 7, et ce ruban 12 se déroule ou s'enroule d'une longueur égale au double de la course de déplacement du bec mobile 7 par suite de l'effet de mouflage.

Le ruban souple 12 peut comporter sur l'une de ses faces une graduation 16 visible au travers d'au moins une fenêtre 17 ménagée par exemple dans le corps 1 et pourvue d'un repère 18, pour une lecture directe du déplacement de ce ruban souple 12. En variante, la fenêtre 17 peut être installée en un autre point du trajet du ruban 12, par exemple sur le bec curviligne mobile 7.

Dans une autre forme de réalisation, le déplacement du ruban souple 12 est détecté par un capteur 19 de type potentiométrique, un détecteur de déplacement, un capteur à impulsions, un détecteur optoélectronique ou autre, associé ici à une poulie 20 sur laquelle passe le ruban 12 ; le capteur 19 peut être proche de l'enrouleur 14, ce capteur 19 étant par exemple porté par le boîtier 15, ou intégré dans ledit boîtier.

La figure 1 illustre l'une et l'autre des deux versions précédentes mais, bien entendu, chacune de ces versions peut être envisagée indépendamment de l'autre.

En se référant aussi aux figures 2 et 3, on décrira maintenant l'utilisation de l'appareil, pour la mesure de longueurs L et de périmètres P.

Dans le cas de la mesure d'une longueur L, telle que la longueur d'un pied humain A, ce pied est placé dans l'espace libre entre les deux becs 6 et 7, et le bec mobile 7 est rapproché du bec fixe 6 de sorte que les extrémités du pied entrent en contact avec les deux butées 10 et 11. Le ruban 12 restant alors rectiligne entre les extrémités respectives 8 et 9 des deux becs 6 et 7, la mesure de la longueur L est égale à la moitié de l'allongement du ruban 12, avec une origine convenablement choisie. La graduation 16 de ce ruban 12, lue au travers de la fenêtre 17, peut donner directement la valeur de la longueur L, exprimée par exemple en centimètres.

Dans le cas de la mesure de périmètres P, on précise qu'il s'agit ici de mesurer le contour d'un objet B tel qu'un talon de chaussure qui suit d'une part un tracé curviligne convexe entre deux points extrêmes, et d'autre part un tracé rectiligne entre ces deux points. L'utilisation de l'appareil, illustrée dans ce cas par la figure 3, consiste à amener les extrémités 8 et 9 des deux becs 6 et 7 en coincidence avec lesdits points extrêmes, et à appliquer le ruban 12 contre le contour en question, ce ruban n'étant plus rectiligne entre les extrémités 8 et 9 des deux becs 6 et 7. La mesure du périmètre P est égale ici à l'allongement du ruban 12, avec une origine convenablement choisie ; cette mesure de périmètre peut être indiquée directement par la graduation 16 du ruban 12, notamment dans le cas d'une graduation double prévue pour la lecture des longueurs L d'une part, et des périmètres P d'autre part.

Si l'appareil permet de rapprocher les extrémités 8 et 9 des deux becs 6 et 7 jusqu'à ce qu'une distance nulle les sépare, il devient possible de mesurer directement un périmètre suivant une courbe convexe fermée, par exemple un tour de tête ou de poignet.

Dans le cas des versions comportant un capteur 19 de détection du déplacement du ruban souple 12, le capteur peut posséder un afficheur électronique indiquant la mesure de longueur ou de périmètre obtenue, l'alimentation électrique du capteur et de l'afficheur étant assurée de préférence par une batterie rechargeable conférant à l'appareil l'autonomie souhaitable.

Le capteur 19 peut, dans des versions plus perfectionnées, comporter une liaison, avec ou sans fil, avec un microordinateur extérieur traitant les mesures obtenues, et permettant notamment un traitement statistique des données.

L'appareil de mesure, décrit ci-dessus, permet entre autres :

– la mesure d'un pied, aussi bien en longueur qu'en section (périmètre d'une section du pied),
– la mesure de la grosseur d'une main ouverte ou fermée,
– d'autres mensurations, par exemple le tour de tête,
– éventuellement, des mesures définissant la forme d'une chaussure.

De plus, il est possible de mesurer des changements de dimensions sur des volumes en mouvement, en ajoutant des capteurs de pression dans les becs 6 et 7.

Comme il va de soi, et comme il ressort de ce qui précède, l'invention ne se limite pas à la seule forme d'exécution de cet appareil pour la mesure de longueurs et de périmètres qui a été décrite ci-dessus, à titre d'exemple ; elle en embrasse, au contraire, toutes les variantes de réalisation et d'application respectant le même principe. Ainsi, l'on ne s'éloignerait pas du cadre de l'invention :

– par des modifications de certaines formes de détail, telles que la forme particulière curviligne du bec mobile qui, n'ayant aucune influence sur la mesure peut être remplacée par une configuration quelconque déterminant un point fixe d'attache du ruban souple ;
– par le recours à tous équivalents techniques, notamment en remplaçant le ruban souple par une courroie crantée ou non, une sangle, un cordon, un fil ou tout autre lien non extensible mais souple, pouvant être guidé à travers ou sur le bec mobile pour former un mouflage ;
– par une utilisation de l'appareil dans une position non horizontale.

## Revendications

1. Appareil pour la mesure de longueurs et de périmètres, caractérisé en ce qu'il comprend, en combinaison :

– un corps principal (1) définissant une direction longitudinale, avec une première butée (10) et un point fixe (8),
– un élément (5,7) monté coulissant en direction longitudinale sur le corps principal (1), l'élément coulissant comportant une seconde butée (11), située en regard de la première butée (10), et cet élément définissant un point mobile (9) situé en regard du point fixe précité (8) à une distance variable de celui-ci,
– un lien souple non extensible (12) qui présente successivement une première extrémité attachée au point fixe précité (8) du corps principal (1), une première partie s'étendant librement entre ce point fixe (8) et le point mobile (9) situé en regard, une partie guidée dans ou sur l'élément coulissant (5,7) depuis ledit point mobile (9) et se prolongeant dans le corps principal (1) parallèlement à sa première partie, et une autre extrémité liée à des moyens de mise en tension (14) portés par le corps principal (1), de sorte que le lien souple (12) forme un mouflage à deux brins, et
– des moyens de détection (16 à 20) du déplacement de ce lien souple (12), représentatif selon le cas de la longueur (L) d'un objet (A) placé entre les deux butées précitées (10,11) et entrant en contact avec celles-ci, ou du périmètre (P) d'un objet (B) entouré par la partie du lien souple (12) s'étendant entre le point fixe (8) et le point mobile (9) précités.

2. Appareil pour la mesure de longueurs et de périmètres selon la revendication 1, caractérisé en ce que les moyens de mise en tension du lien souple (12) sont constitués par un enrouleur (14), porté par le corps principal (1), de sorte que le déplacement du lien souple (12) correspond directement à la longueur déroulée de ce lien souple.

3. Appareil pour la mesure de longueurs et de périmètres selon la revendication 1 ou 2, caractérisé en ce que le lien souple est conformé comme un ruban souple (12), portant sur au moins une partie de sa longueur une graduation (16) lisible au travers d'au moins une fenêtre (17) ménagée, par exemple, dans le corps principal (1).

4. Appareil pour la mesure de longueurs et de périmètres selon la revendication 3, caractérisé en ce que la graduation (16) du ruban souple (12) est double et conçue pour fournir ainsi, directement, soit une mesure de longueur (L), soit une mesure de périmètre (P) selon l'utilisation de l'appareil.

5. Appareil pour la mesure de longueurs et de périmètres selon la revendication 1 ou 2, caractérisé en ce qu'il comporte un capteur électrique ou électronique (19) de déplacement du lien souple (12).

6. Appareil pour la mesure de longueurs et de périmètres selon la revendication 5, caractérisé en ce que le capteur électrique ou électronique est un capteur (19) détectant la rotation d'un organe rotatif tel que poulie (20) sur lequel passe le lien souple (12).

7. Appareil pour la mesure de longueurs et de périmètres selon l'une quelconque des revendications 1 à 6, caractérisé en ce que son corps principal (1), de forme allongée, possède une partie formant glissière longitudinale (4) pour l'élément coulissant (5,7), et est muni latéralement d'un bec curviligne fixe (6) dont l'extrémité libre (8) définit le point fixe d'attache du lien souple (12) et qui porte la première butée (10), tandis que l'élément coulissant est conformé comme un coulisseau (5), monté mobile dans la glissière longitudinale (4) du corps (1), coulisseau auquel se rattache un bec curviligne mobile (7) de conformation tubulaire dont l'extrémité libre (9) définit le point mobile précité et qui porte la seconde butée (11), le lien souple (12) traversant le passage (13) défini par la conformation tubulaire du bec curviligne mobile (7).

8. Appareil pour la mesure de longueurs et de périmètres selon la revendication 7, caractérisé en ce que le corps principal (1) de forme allongée est muni à ses extrémités de plots d'appui (2,3), tandis que les butées (10,11) portées respectivement par les becs fixe (6) et mobile (7) constituent aussi des pieds d'appui.

FIG_1

FIG_2

FIG_3

Office européen
des brevets

# RAPPORT DE RECHERCHE EUROPEENNE

Numero de la demande

EP    91 42 0305

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-601 271 (SIDWELL) <br> * page 2, ligne 43 - ligne 96; figures * <br> --- | 1,3 | G01B5/02 <br> A43D1/02 |
| A | US-A-3 032 880 (R.M. SHAW) <br> * figure 3 * <br> --- | 1,5,6 | |
| A | BE-A-810 081 (CLARKS) <br> * page 12, ligne 29 - page 14; figures * <br> --- | 1 | |
| A | FR-A-2 350 086 (SALOMON) <br> * page 9, ligne 9 - page 11, ligne 24; figures * <br> --- | 1-3 | |
| A | US-A-1 448 222 (C.F. JOHNSTON FT AL.) <br> * le document en entier * <br> --- | 1-3 | |
| A | DE-C-221 901 (W.DAÜKER) <br> * le document en entier * <br> --- | 1 | |
| A | DE-C-458 882 (H.E. CLARKE) <br> * figures * <br> --- | 1,8 | |
| A | DE-C-486 402 (A. WEICHELT) <br> * figure 6 * <br> ----- | 1 | **DOMAINES TECHNIQUES RECHERCHES (Int. Cl.5 )** <br><br> G01B <br> A43D |

Le présent rapport a été établi pour toutes les revendications

| Lieu de la recherche | Date d'achèvement de la recherche | Examinateur |
|---|---|---|
| LA HAYE | 10 OCTOBRE 1991 | RAMBOER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

      & : membre de la même famille, document correspondant

EPO FORM 1503 03.82 (P0402)